# EUROPEAN PATENT APPLICATION

(11) **EP 4 831 467 A1**
(43) Date of publication of application: **28.10.2026**
(21) Application number: 26172879.4
(22) Date of filing: 16.04.2026
(51) Int. Cl.: F02C 6/08, F02C 9/18, F04D 27/02

(54) **METHOD OF OPERATING A BLEED VALVE OF AN AIRCRAFT ENGINE**

(30) Priority: 17.04.2025 US 202519181869
(71) Applicant: Pratt & Whitney Canada Corp., Longueuil, Québec J4G 1A1 (CA)
(72) Inventor: MILITELLO, Ariana, (01BE5) Longueuil, J4G 1A1 (CA); PERERA, Ryan, (01BE5) Longueuil, J4G 1A1 (CA)
(74) Representative: Dehns

(57) **Abstract**

A method for operating a bleed valve (30) in a compressor (14) includes: with the bleed valve (30) positioned in a first configuration to vary a flow rate of compressed air bled from the compressor (14) in response to a pressure difference between a pressure of the compressed air and a modulating pressure exerted by an actuating fluid on the bleed valve (30), varying the modulating pressure of the actuating fluid from a first modulating pressure to a second modulating pressure to move the bleed valve (30) to a second configuration; upon detection of a configuration discrepancy between an actual configuration and the second configuration despite the bleed valve (30) being exposed to the second modulating pressure: varying the modulating pressure from the second modulating pressure to at least a third modulating pressure to vary the pressure difference; and moving the bleed valve (30) to the second configuration, using the third modulating pressure of the actuating fluid.

## Description

### TECHNICAL FIELD

The present invention relates generally to aircraft engines and, more particularly, to systems and methods used to bleed compressed air from compressors of such engines.

### BACKGROUND

Aircraft engines, such as gas turbine engines, have compressors that compress intake air prior to being fed into a combustor. The compressed air is often bled from a main gaspath of the compressor. For example, air may be bled out of the compressor to mitigate against conditions which may lead to compressor surge. Existing systems and methods for bleeding this compressed air are satisfactory, but there remains a need for improvement.

### SUMMARY

According to an aspect of the present invention, there is provided a method for operating a bleed valve in a compressor of an aircraft engine, the method comprising: with the bleed valve positioned in a first configuration of a plurality of configurations used to vary a flow rate of compressed air bled from the compressor in response to a pressure difference between a pressure of the compressed air and a modulating pressure exerted by an actuating fluid on the bleed valve, varying the modulating pressure of the actuating fluid from a first modulating pressure to a second modulating pressure different than the first modulating pressure to move the bleed valve from the first configuration to a second configuration of the plurality of configurations; upon detection of a configuration discrepancy between an actual configuration of the bleed valve and the second configuration, despite the bleed valve being exposed to the second modulating pressure: varying the modulating pressure from the second modulating pressure to at least a third modulating pressure different than the second modulating pressure to vary the pressure difference; and moving the bleed valve to the second configuration, using the third modulating pressure of the actuating fluid.

The method defined above and described herein also includes, in certain embodiment, any one or more of the following features, in whole or in part, and in any combination.

Optionally, and in accordance with the above, the bleed valve has a reference inlet fluidly connected to a source of the fluid via an actuated valve, the varying of the modulating pressure from the second modulating pressure to the third modulating pressure includes: varying a flow circulating area of an outlet of the actuated valve.

Optionally, and in accordance with any of the above, the source of the fluid is a high-pressure compressor located downstream of the compressor, the method comprising: fluidly connecting the high-pressure compressor to the reference inlet through the actuated valve.

Optionally, and in accordance with any of the above, the varying of the modulating pressure from the second modulating pressure to the third modulating pressure includes: cyclically varying the modulating pressure between the second modulating pressure and the third modulating pressure.

Optionally, and in accordance with any of the above, the bleed valve is biased in the first configuration by a biasing member, the varying of the modulating pressure from the first modulating pressure to the second modulating includes: varying the modulating pressure to the second modulating pressure being selected to account for a biasing force generated by the biasing member.

Optionally, and in accordance with any of the above, the first configuration corresponds to an open configuration of the bleed valve.

Optionally, and in accordance with any of the above, the determining of the presence of the configuration discrepancy includes: receiving a signal from a sensor operatively connected to the bleed valve, the sensor configured for sensing a position of a valve member of the bleed valve.

Optionally, and in accordance with any of the above, the receiving of the signal from the sensor include receiving the signal from a linear variable differential transformer.

Optionally, and in accordance with any of the above, the second modulating pressure is selected to account for a biasing force generated by the biasing member.

Optionally, and in accordance with any of the above, the sensor comprises a linear variable differential transformer.

According to another aspect of the present invention, there is provided an aircraft engine, comprising: a compressor section having blades and vanes extending across a gaspath defined between cases, one of the cases defining a bleed opening; and a bleed valve communicating with the bleed opening for controlling a flow rate of compressed air exiting the compressor section via the bleed opening, the bleed valve having an inlet communicating with the gaspath, an outlet communicating with an environment outside the aircraft engine, and a reference inlet, the bleed valve having a plurality of configurations to vary the flow rate; a sensor operatively connected to the bleed valve; a source of an actuation fluid fluidly connected to the reference inlet of the bleed valve; and a controller operatively connected to the bleed valve and the sensor, the controller having a processing unit operatively connected to a computer-readable medium having instructions stored thereon executable by the processing unit to: determine that the flow rate of the compressed air through the bleed opening requires modulation; cause a variation of a modulating pressure exerted by the actuation fluid on the bleed valve via the reference inlet from a first modulating pressure to a second modulating pressure to move the bleed valve from a first configuration to a second configuration of the plurality of configurations to vary the flow rate; receive a signal from the sensor indicative that the bleed valve remains offset from the second configuration despite being exposed to the second modulating pressure; and cause an additional variation of the modulating pressure by applying a third modulating pressure different than the second modulating pressure to vary a pressure force exerted on the bleed valve.

The aircraft engine as defined above and described herein also includes, in certain embodiment, any one or more of the following features, in whole or in part, and in any combination.

Optionally, and in accordance with the above, an actuated valve is operatively connected to the controller and having an inlet fluidly connected to the source of the fluid and an outlet fluidly connected to the reference inlet of the bleed valve, a flow circulating area of the outlet of the actuated valve being variable to vary the modulating pressure exerted by the fluid on the bleed valve via the reference inlet.

Optionally, and in accordance with any of the above, the computer-readable medium has the instructions stored thereon executable by the processing unit to cause the additional variation of the modulating pressure by: causing the actuated valve to vary the flow circulating area of the outlet of the actuated valve.

Optionally, and in accordance with any of the above, the compressor section includes a low-pressure compressor and a high-pressure compressor rotatable relative to the low-pressure compressor, the bleed valve located upstream of the high-pressure compressor, the source of the fluid being the high-pressure compressor.

Optionally, and in accordance with any of the above, the bleed valve is biased in the first configuration by a biasing member, the computer-readable medium having the instructions stored thereon executable by the processing unit to cause the variation of the modulating pressure by: causing the variation of the modulating pressure to account for a biasing force generated by the biasing member.

Optionally, and in accordance with any of the above, the computer-readable medium has the instructions stored thereon executable by the processing unit to cause the additional variation of the modulating pressure to the third modulating pressure different than the second modulating pressure by: cyclically varying the modulating pressure between the second modulating pressure and the third modulating pressure.

Optionally, and in accordance with any of the above, the sensor is a linear variable differential transformer sensing displacement of a valve member of the bleed valve.

Optionally, and in accordance with any of the above, the computer-readable medium has the instructions stored thereon executable by the processing unit to determine that the flow rate of the compressed air through the bleed opening requires modulation by: determining that a surge margin of the compressor section is above a threshold.

According to another aspect of the present invention, there is provided a method operating a bleed valve in a compressor of an aircraft engine, the method comprising: controlling a flow rate of compressed air bled from the compressor section with the bleed valve, the bleed valve having a reference inlet fluidly connected to a source of an actuation fluid, the bleed valve having a plurality of configurations to vary the flow rate; determining that the flow rate of the compressed air through the bleed valve requires modulation; varying a modulating pressure exerted by the actuation fluid on the bleed valve via the reference inlet from a first modulating pressure to a second modulating pressure to move the bleed valve from a first configuration to a second configuration of the plurality of configurations to vary the flow rate; determining that the bleed valve remains offset from the second configuration despite being exposed to the second modulating pressure; and additionally varying the modulating pressure by applying a third modulating pressure different than the second modulating pressure to vary a pressure force exerted on the bleed valve.

The method defined above and described herein also includes, in certain embodiment, any one or more of the following features, in whole or in part, and in any combination.

Optionally, and in accordance with the above, the source of the fluid is fluidly connected to the reference inlet via an actuated valve, a flow circulating area of an outlet of the actuated valve being variable to vary the pressure exerted by the fluid on the bleed valve via the reference inlet, the method comprising further varying the modulating pressure to the third modulating pressure by varying the flow circulating area of the outlet of the actuated valve.

Optionally, and in accordance with any of the above, the further varying of the modulating pressure includes cyclically varying the modulating pressure between the second modulating pressure and the third modulating pressure.

In some embodiments, the determining that the bleed valve remains offset from the second configuration includes receiving a signal from a sensor operatively connected to the bleed valve.

### DESCRIPTION OF THE DRAWINGS

Reference is now made to the accompanying figures in which:
Fig. 1 is a schematic cross-sectional view of an aircraft engine depicted as a gas turbine engine;
Fig. 2 is a cutaway view of a compressor section of the gas turbine engine of Fig. 1;
Fig. 3 is a schematic representation of a bleed valve system for the compressor section of Fig. 2;
Figs. 4A to 4C are graphs illustrating modulating pressure variations as a function of time for different operating conditions of the bleed valve of Fig. 3;
Figs. 4D to 4E are schematic representations of positions of a valve member of the bleed valve for each of the different operating conditions represented in Figs. 4A to 4C;
Fig. 5 is a flowchart illustrating steps of a method of operating the bleed valve of Fig. 3;
Fig. 6 is a flowchart illustrating steps of a method of controlling a flow rate of air bled through the bleed valve of Fig. 3; and
Fig. 7 is a schematic representation of a controller in accordance with one embodiment.

### DETAILED DESCRIPTION

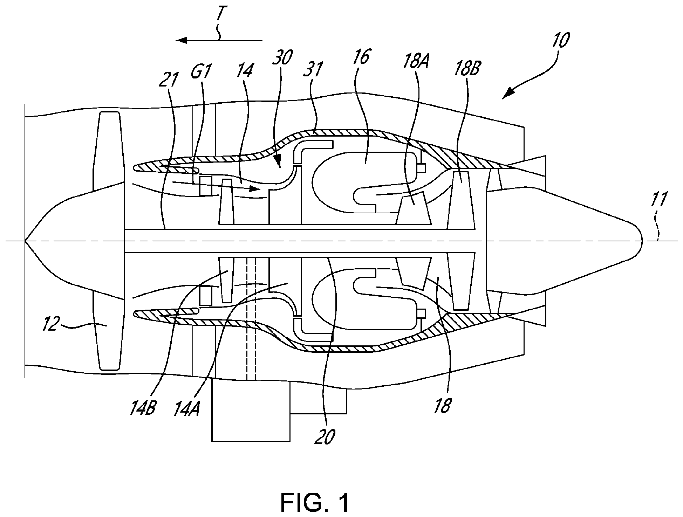

Fig. 1 illustrates an aircraft engine depicted as a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The fan 12, the compressor section 14, and the turbine section 18 are rotatable about a central axis 11 of the gas turbine engine 10. In the embodiment shown, the gas turbine engine 10 comprises a high-pressure spool having a high-pressure shaft 20 drivingly engaging a high-pressure turbine 18A of the turbine section 18 to a high-pressure compressor 14A of the compressor section 14, and a low-pressure spool having a low-pressure shaft 21 drivingly engaging a low-pressure turbine 18B of the turbine section to a low-pressure compressor 14B of the compressor section 14 and drivingly engaged to the fan 12. It will be understood that the contents of the present invention may be applicable to any suitable engines, such as turboprops and turboshafts, and reciprocating engines, such as piston and rotary engines without departing from the scope of the present invention.

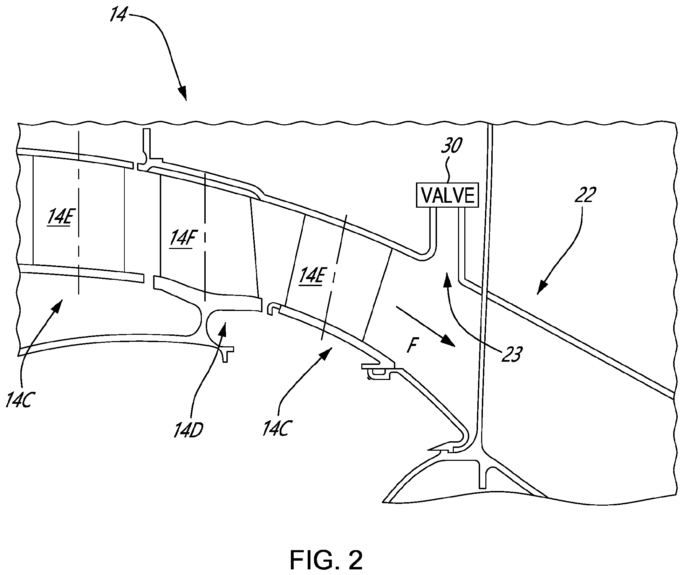

Referring to Fig. 2, the compressor section 14 includes a plurality of compressor stages each include a stator 14C and a rotor 14D. The stator 14C include stator vanes 14E and the rotor 14D includes rotor blades 14F. Air flows along flow direction denoted by arrow F through a gas path of the gas turbine engine 10. The compressor section 14 has a compressor housing 22 having one or more bleed ports 23 which allow a working fluid, such as air, to be removed or "bled" from the compressor section 14. The bleed port 23 is positioned downstream of at least one of compressor stages. A bleed valve 30 is fluidly connected with the bleed port 23 and operable to control a flow rate of the compressed air being bled out of the compressor section 14. A plurality of bleed valve 30 may be used when more than one bleed port 23 is used. The number/size of bleed valve(s) 30 employed on a given compressor section 14 can vary based on numerous factors such as, but not limited to, the type of gas turbine engine 10, the size of the compressor section, and the required bleed capacity.

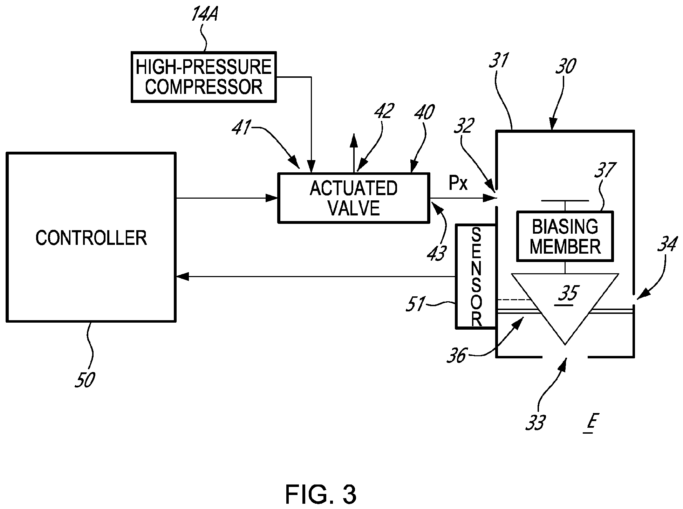

Referring now to Fig. 3, the bleed valve 30 includes a housing 31 that defines a reference inlet 32 of the bleed valve 30, an inlet 33 of the bleed valve 30 for receiving air from the compressor section 14, and an outlet 34 for outputting the bled air from the compressor section 14 to an environment E outside a gas path of the compressor section 14 or outside the gas turbine engine 10. A valve member 35 is movably received within the housing 31 and moves towards and away from a valve seat 36. A biasing member 37 biases the valve member 35 in a position being offset from the valve seat 36. The biasing member 37 may be omitted in some configurations. Put differently, the biasing member 37 biases the bleed valve 30 in an open configuration in which the inlet 33 is fluidly connected to the outlet 34 through the bleed valve 30. In a closed configuration of the bleed valve 30, the valve member 35 is sealingly abutting the valve seat 36 and the inlet 33 is disconnected from the outlet 34 by the bleed valve 30. The biasing member may bias the valve member in a closed configuration in another embodiment.

The bleed valve 30 is a pressure-actuated valve in that it relies on a pressure of an actuation fluid received via the reference inlet 32 for moving the valve member 35 relative to the valve seat 36. In this configuration, the actuation fluid is compressed air from the compressor section 14 and bled from another location within the engine downstream of the bleed port 23. The actuation fluid may be, air or, alternatively, oil, fuel, or any other actuation fluid such as a hydraulic fluid with a great enough pressure. The actuation fluid received at the reference inlet 32 generates a force on the valve member 35; the force generated by the actuation fluid counteracting a force exerted on the valve member 35 by the air flowing in the compressor section 14.

An actuated valve 40 is used to control a quantity of the actuation fluid that flows into the bleed valve 30 to oppose a pressure force exerted by the air and the biasing member 37. The actuated valve 40 has an inlet 41 fluidly connected to a source of the actuation fluid, in this case the high-pressure compressor 14A, a first outlet 42 fluidly connected to the environment E outside of the compressor section of the gas turbine engine 10, and a second outlet 43 fluidly connected to the reference inlet 32 of the bleed valve 30. The actuated valve 40 may include an actuator, such as a torque motor, engaged to a member that moves relative to a seat to vary a mass flow rate and thus, the pressure of the actuation fluid (e.g., air) that flows to the second outlet 43 relative to a mass flow rate of the actuation fluid that flows to the first outlet 42.

When it is desired to open the bleed valve 30 to fluidly connected the bleed port 23 to the environment E for bleeding air out of the compressor section 14 via the outlet 34 of the bleed valve 30, the actuated valve 40 may close the second outlet 43, or reduce its cross-sectional area, and the air supplied to the actuated valve from the high-pressure compressor 14A is routed to the environment E via the first outlet 42. This has the effect of decreasing the force exerted by the pressure of the actuation fluid on the valve member 35 below a combined force generated by the pressure of the air in the compressor section 14 and by the biasing member 37. This results in the valve member 35 moving away from the valve seat 36 to allow air to be bled out of the compressor via the inlet 33. Understandably, if there is no biasing member 37, the pressure required is less since it is not necessary to overcome a force generated by a biasing member.

When it is desired to close the bleed valve 30, the actuated valve 40 opens the second outlet 43 sufficiently to allow air to reach the bleed valve 30 via the reference inlet 32 to exert a force against the valve member 35 of the bleed valve 30 to overcome a combined force exerted by the pressure of the air in the compressor section 14 supplied via the inlet 33 and by the biasing member 37 against the valve member 35 and until the valve member 35 is seated against the valve seat 36.

Still referring to Fig. 3, the bleed valve 30 and the actuated valve 40 are operatively connected to a controller 50. The controller 50 is operatively connected to a sensor 51 that is operatively connected to the bleed valve 30. The sensor 51, which may be a linear variable differential transformer (LVTD), and is operable to generate a signal indicative of a position of the valve member 35 of the bleed valve 30. Thus, the controller 50, by the signals received from the sensor 51, may know in which position the valve member 35 is.

It has been observed by the inventors of the present invention that, in some cases, the bleed valve 30 is not responsive to a command to close, open or modulate the bleed valve 30. In the event where the bleed valve 30 remains closed and does not open when commanded, engine surging at low power may occur due to surge margin loss. This may reduce the available thrust of the engine. In the event where the bleed valve 30 remains open and does not close when commended, excessive bleed at high power may occur. This may result in an inability to reach a desired power. In the event that the bleed valve 30 does not modulate to the commanded intermediate position - not fully open or not fully closed - the compressor may operate inefficiently leading to higher fuel consumption.

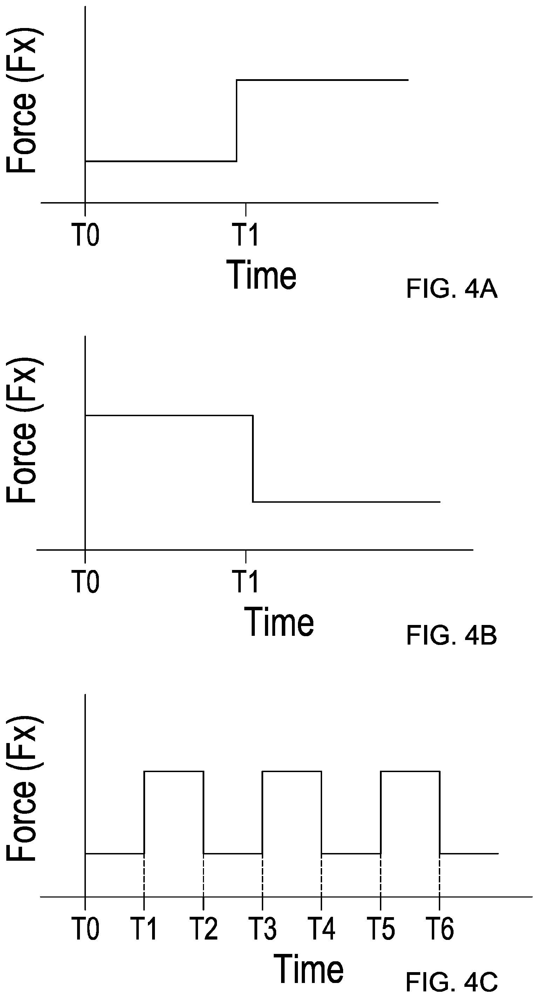

Referring now to Figs. 4A to 4F, three different scenarios are illustrated with graphs depicting variations of a force applied to the valve member 35 of the bleed valve 30 as a function of time.

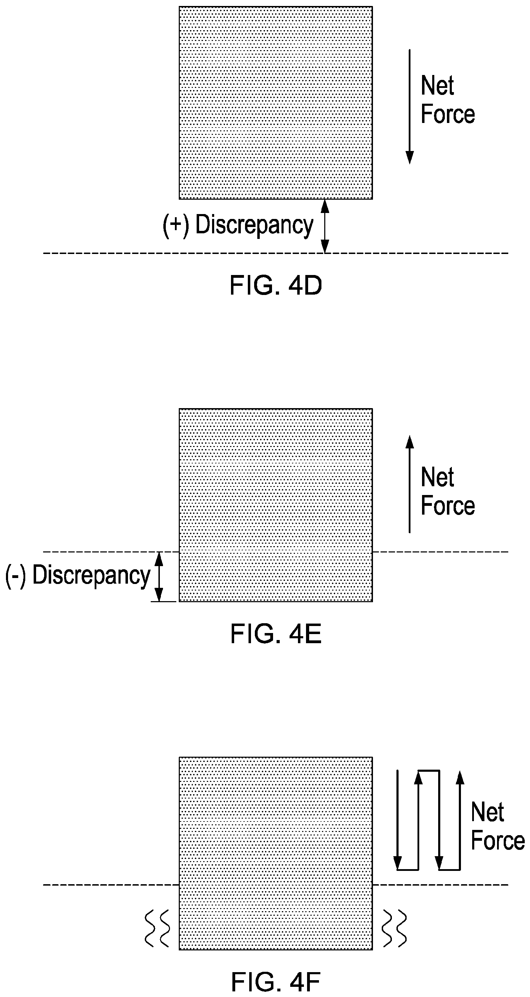

In Figs. 4A and 4D, at time T0, the actuation fluid exerts a force on the valve member 35 that is expected to move the bleed valve 30 from the open configuration to the closed configuration. However, the bleed valve 30 remains offset from the closed configuration, either by staying in the open configuration or by moving to an intermediate position. At which point, it may be commanded to increase the force generated by the actuation fluid on the valve member 35 at T1 to move the valve in the desired closed configuration. In this situation, the pressure of the actuation fluid is selected to overcome the pressure applied by the compressed air at the bleed valve inlet 33 and the force generated on the valve member 35 by the biasing member 37. The pressure increase of the actuation fluid at T1 is selected to increase the resultant force generated on the valve member 35 in a direction toward the closed configuration (e.g., downwardly in Fig. 3).

In Figs. 4B and 4E, at time T0, the actuation fluid exerts a force on the valve member 35 that is expected to move the bleed valve 30 from the closed configuration to the open configuration. However, the bleed valve 30 remains offset from the open configuration, either by staying in the closed configuration or by moving to an intermediate position that does not provide the desired flow rate of bleed air. At which point, it may be commanded to decrease the force generated by the actuation fluid on the valve member 35 at T1 to move the valve in the desired opened configuration. In this situation, the pressure of the actuation fluid is selected to be overcame by the pressure supplied by the compressed air at the bleed valve inlet 33 and the force generated on the valve member 35 by the biasing member 37. The pressure decrease of the actuation pressure at T1 is selected to increase the resultant force generated on the valve member 35 in a direction toward the open configuration (e.g., upwardly in Fig. 3).

Therefore, in the situations of Figs. 4A and 4B, the adjustment of the pressure of the actuation fluid is selected to increase a net force applied on the valve member 35. The direction of the net force changes depending of whether it is desired to move the valve member 35 towards the open configuration or towards the closed configuration. But, in absolute value, the valve member 35 experiences an increase in a net force when accounting for the actuation fluid pressure along with all other contributing forces, such as those from inlet 33, the biasing member 37, and any additional forces specific to the bleed valve design.

Figs. 4C and 4F depict a situation similar as the one depicted in Fig. 4A, that is, when the bleed valve 30 remains open when it is desired to close it. However, in this case, the pressure of the actuation fluid is cyclically increased at T1, T3, and T5 and decreased at T2, T4, and T6. This fluctuation in the actuation pressure may cause a "jiggling" effect on the valve member 35 that may cause the valve member 35 to become unstuck and move to the desired configuration. The same cyclic variation of the actuation pressure may be applied if the valve does not open when commanded as explained above with reference to Fig. 4B. In this configuration, the net force may also fluctuate.

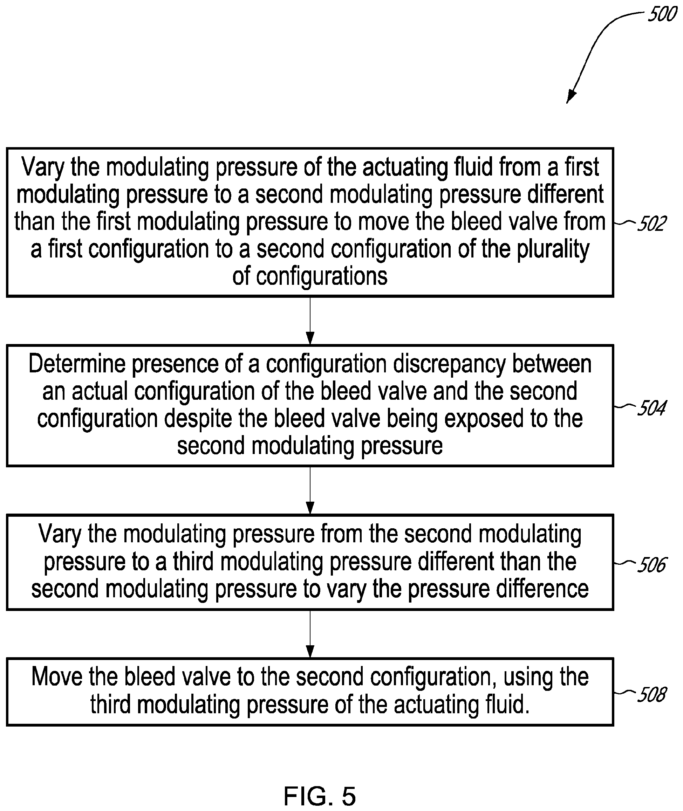

Referring now to Fig. 5, a method for operating the bleed valve is shown at 500. The method 500 includes varying the modulating pressure of the actuating fluid from a first modulating pressure to a second modulating pressure different than the first modulating pressure to move the bleed valve from a first configuration to a second configuration of the plurality of configurations at 502; determining presence of a configuration discrepancy between an actual configuration of the bleed valve and the second configuration despite the bleed valve being exposed to the second modulating pressure at 504; varying the modulating pressure from the second modulating pressure to a third modulating pressure different than the second modulating pressure to vary the pressure difference at 506; and moving the bleed valve to the second configuration, using the third modulating pressure of the actuating fluid at 508.

Put differently, when a position discrepancy exceeds a threshold, it is possible to adjust the net force on the valve member to correct it. The system may continuously monitor the position difference between the actual and measured values (using a sensor or other indirect methods). If the valve member does not respond to force corrections, this may indicate a stuck valve. A fluctuating force may be applied in an attempt to remedy this situation. If the valve member moves at this point, then the system returns to first step to adjust for the correct position. In other words, the objective is to adjust for overshooting or undershooting the target. This may allow the reaction to adapt to various causes, such as a leak in the actuation fluid line requiring more force to move the valve member, damage causing increased friction, or damage to the biasing member itself leading to less net force needed to move the valve.

In some embodiments, the varying of the modulating pressure from the second modulating pressure to the third modulating pressure includes: varying a flow circulating area of the second outlet 43 of the actuated valve 40.

As aforementioned, the source of the actuation fluid may be the high-pressure compressor. Hence, the method 500 includes: fluidly connecting the high-pressure compressor to the reference inlet through the actuated valve.

In some embodiments, as shown in Fig. 4C, the varying of the modulating pressure from the second modulating pressure to the third modulating pressure includes: cyclically varying the modulating pressure between the second modulating pressure and the third modulating pressure.

In some embodiments, the varying of the modulating pressure from the first modulating pressure to the second modulating includes: varying the modulating pressure to the second modulating pressure being selected to account for a biasing force generated by the biasing member 37. The first configuration may correspond to the open configuration of the bleed valve 30.

In some embodiments, determining of the presence of the configuration discrepancy at 504 includes receiving a signal from the sensor 51 that is operatively connected to the bleed valve 30 and configured for sensing a position of the valve member 35 of the bleed valve 30. This signal may be received from the linear variable differential transformer. **In** some cases, the valve position may be determined by other means, such as by using compressor pressure, spool speed match up, etc.

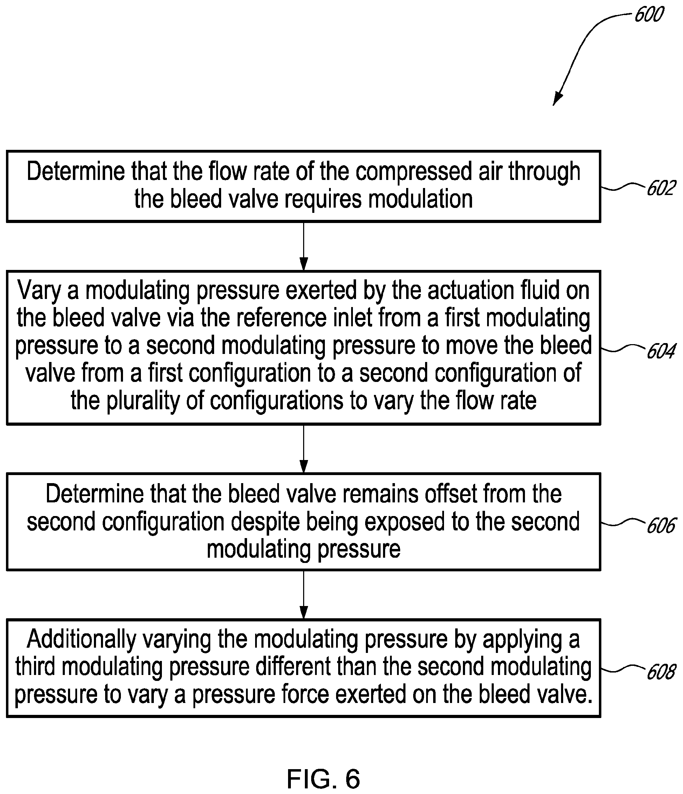

Referring to Fig. 6, a method for controlling a flow rate of compressed air bled from the compressor section 14 via the bleed valve 30 is shown at 600. The method 600 may be performed by the controller 50. The method 600 includes determining that the required flow rate through the bleed valve 30 requires modulation at 602; varying a modulating pressure exerted by the actuation fluid on the bleed valve 30 via the reference inlet 32 from a first modulating pressure to a second modulating pressure to move the bleed valve 30 from a first configuration to a second configuration of the plurality of configurations to adjust the flow rate at 604; determining that the bleed valve 30 remains offset from the second configuration despite being exposed to the second modulating pressure at 606; and additionally varying the modulating pressure by applying a third modulating pressure different than the second modulating pressure to vary a pressure force exerted on the bleed valve 30 at 608.

Features of the method 500 described above are also applicable to this method 600.

The method 600 includes additionally varying the modulating pressure by causing the actuated valve to vary the flow circulating area of the outlet of the actuated valve.

In some embodiments, the method 600 includes determining that the flow rate of the compressed air through the bleed opening 34 requires modulation by: determining that a surge margin of the compressor section is above a threshold.

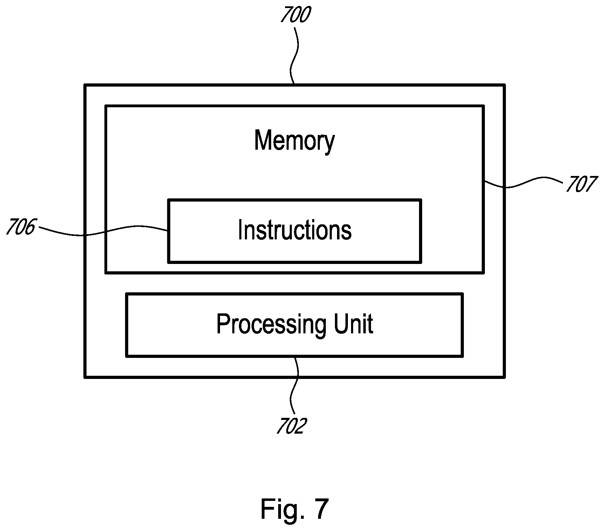

With reference to Fig. 7, an example of a computing device 700 is illustrated. For simplicity only one computing device 700 is shown but the system may include more computing devices 700 operable to exchange data. The computing devices 700 may be the same or different types of devices. The controller 50 may be implemented with one or more computing devices 700. Note that the controller 50 can be implemented as part of a full-authority digital engine controls (FADEC) or other similar device, including electronic engine control (EEC), engine control unit (ECU), electronic propeller control, propeller control unit, and the like. In some embodiments, the controller 50 is implemented as a Flight Data Acquisition Storage and Transmission system, such as a FAST^{™} system. The controller 50 may be implemented in part in the FAST^{™} system and in part in the EEC. Other embodiments may also apply.

The computing device 700 comprises a processing unit 702 and a memory 704 which has stored therein computer-executable instructions 706. The processing unit 702 may comprise any suitable devices configured to implement the method described herein such that instructions 706, when executed by the computing device 700 or other programmable apparatus, may cause the functions/acts/steps performed as part of the method as described herein to be executed. The processing unit 702 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 704 may comprise any suitable known or other machine-readable storage medium. The memory 704 may comprise non-transitory computer readable storage medium, for example, but not limited to, an electronic, magnetic, optical, electromagnetic, infrared, or semiconductor system, apparatus, or device, or any suitable combination of the foregoing. The memory 704 may include a suitable combination of any type of computer memory that is located either internally or externally to device, for example random-access memory (RAM), read-only memory (ROM), compact disc read-only memory (CDROM), electro-optical memory, magnetooptical memory, erasable programmable read-only memory (EPROM), and electrically-erasable programmable read-only memory (EEPROM), Ferroelectric RAM (FRAM) or the like. Memory 704 may comprise any storage means (e.g., devices) suitable for retrievably storing machine-readable instructions 706 executable by processing unit 702.

The methods and systems described herein may be implemented in a high level procedural or object oriented programming or scripting language, or a combination thereof, to communicate with or assist in the operation of a computer system, for example the computing device 700. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 702 of the computing device 700, to operate in a specific and predefined manner to perform the functions described herein, for example those described in the method described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The term "connected" or "coupled to" may include both direct coupling (in which two elements that are coupled to each other contact each other) and indirect coupling (in which at least one additional element is located between the two elements).

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present invention are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present invention is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present invention have been disclosed, it will be apparent to those of ordinary skill in the art that many more embodiments and implementations are possible within the scope of the present invention. For example, the present invention as described herein includes several aspects and embodiments that include particular features. Although these particular features may be described individually, it is within the scope of the present invention that some or all of these features may be combined with any one of the aspects and remain within the scope of the present invention. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present invention, a person of ordinary skill in the art will recognize that changes may be made to the embodiments described herein without departing from the scope of the present technology. Yet further modifications could be implemented by a person of ordinary skill in the art in view of the present invention, which modifications would be within the scope of the present technology.

## Claims

1. A method for operating a bleed valve (30) in a compressor (14) of an aircraft engine (10), the method comprising:
with the bleed valve (30) positioned in a first configuration of a plurality of configurations used to vary a flow rate of compressed air bled from the compressor (14) in response to a pressure difference between a pressure of the compressed air and a modulating pressure exerted by an actuating fluid on the bleed valve (30), varying the modulating pressure of the actuating fluid from a first modulating pressure to a second modulating pressure different than the first modulating pressure to move the bleed valve (30) from the first configuration to a second configuration of the plurality of configurations;
upon detection of a configuration discrepancy between an actual configuration of the bleed valve (30) and the second configuration, despite the bleed valve (30) being exposed to the second modulating pressure:
varying the modulating pressure from the second modulating pressure to at least a third modulating pressure different than the second modulating pressure to vary the pressure difference; and
moving the bleed valve (30) to the second configuration, using the third modulating pressure of the actuating fluid.

2. The method of claim 1, wherein the bleed valve (30) has a reference inlet (32) fluidly connected to a source of the fluid via an actuated valve (40), and the varying of the modulating pressure from the second modulating pressure to the third modulating pressure includes:
varying a flow circulating area of an outlet (43) of the actuated valve (40).

3. The method of claim 2, wherein the source of the fluid is a high-pressure compressor (14A) located downstream of the compressor (14), the method comprising:
fluidly connecting the high-pressure compressor (14A) to the reference inlet (32) through the actuated valve (40).

4. The method of any preceding claim, wherein the varying of the modulating pressure from the second modulating pressure to the third modulating pressure includes:
cyclically varying the modulating pressure between the second modulating pressure and the third modulating pressure.

5. The method of any preceding claim, wherein the bleed valve (30) is biased in the first configuration by a biasing member (37), and the varying of the modulating pressure from the first modulating pressure to the second modulating includes:
varying the modulating pressure to the second modulating pressure being selected to account for a biasing force generated by the biasing member (37).

6. The method of any preceding claim, wherein the first configuration corresponds to an open configuration of the bleed valve (30).

7. The method of any preceding claim, wherein the determining of the presence of the configuration discrepancy includes:
receiving a signal from a sensor (51) operatively connected to the bleed valve (30), the sensor (51) configured to sense a position of a valve member (35) of the bleed valve (30).

8. The method of claim 7, wherein the receiving of the signal from the sensor (51) includes receiving the signal from a linear variable differential transformer.

9. An aircraft engine (10), comprising:
a compressor section (14) having blades (14F) and vanes (14E) extending across a gaspath defined between cases, wherein one of the cases defines a bleed opening (34); and
a bleed valve (30) communicating with the bleed opening (34) for controlling a flow rate of compressed air exiting the compressor section (14) via the bleed opening (34), the bleed valve (30) having an inlet (33) communicating with the gaspath, an outlet (34) communicating with an environment outside the aircraft engine (10), and a reference inlet (32), the bleed valve (30) having a plurality of configurations to vary the flow rate;
a sensor (51) operatively connected to the bleed valve (30);
a source of an actuation fluid fluidly connected to the reference inlet (32) of the bleed valve (30); and
a controller (50) operatively connected to the bleed valve (30) and the sensor (51), the controller (50) having a processing unit (702) operatively connected to a computer-readable medium (707) having instructions (706) stored thereon executable by the processing unit (702) to:
determine that the flow rate of the compressed air through the bleed opening (34) requires modulation;
cause a variation of a modulating pressure exerted by the actuation fluid on the bleed valve (30) via the reference inlet (32) from a first modulating pressure to a second modulating pressure to move the bleed valve (30) from a first configuration to a second configuration of the plurality of configurations to vary the flow rate;
receive a signal from the sensor (51) indicative that the bleed valve (30) remains offset from the second configuration despite being exposed to the second modulating pressure; and
cause an additional variation of the modulating pressure by applying a third modulating pressure different than the second modulating pressure to vary a pressure force exerted on the bleed valve (30).

10. The aircraft engine (10) of claim 9, further comprising an actuated valve (40) operatively connected to the controller (50) and having an inlet (41) fluidly connected to the source of the fluid and an outlet (34) fluidly connected to the reference inlet (32) of the bleed valve (30), a flow circulating area of the outlet (43) of the actuated valve (40) being variable to vary the modulating pressure exerted by the fluid on the bleed valve (30) via the reference inlet (32), wherein, optionally, the computer-readable medium (707) has the instructions (706) stored thereon executable by the processing unit (702) to cause the additional variation of the modulating pressure by: causing the actuated valve (40) to vary the flow circulating area of the outlet (43) of the actuated valve (40).

11. The aircraft engine (10) of any of claims 9 to 10, wherein the compressor section (14) includes a low-pressure compressor (14B) and a high-pressure compressor (14A) rotatable relative to the low-pressure compressor (14B), the bleed valve (30) located upstream of the high-pressure compressor (14A), the source of the fluid being the high-pressure compressor (14A).

12. The aircraft engine (10) of any of claims 9 to 11, wherein the bleed valve (30) is biased in the first configuration by a biasing member (37), the computer-readable medium (707) having the instructions (706) stored thereon executable by the processing unit (702) to cause the variation of the modulating pressure by:
causing the variation of the modulating pressure to account for a biasing force generated by the biasing member (37).

13. The aircraft engine (10) of any of claims 9 to 12, wherein the computer-readable medium (707) has the instructions (706) stored thereon executable by the processing unit (702) to cause the additional variation of the modulating pressure to the third modulating pressure different than the second modulating pressure by:
cyclically varying the modulating pressure between the second modulating pressure and the third modulating pressure.

14. The aircraft engine (10) of any of claims 9 to 13, wherein the sensor (51) is a linear variable differential transformer sensing displacement of a valve member (35) of the bleed valve (30).

15. The aircraft engine (10) of any of claims 9 to 14, wherein the computer-readable medium (707) has the instructions (706) stored thereon executable by the processing unit (702) to determine that the flow rate of the compressed air through the bleed opening (34) requires modulation by:
determining that a surge margin of the compressor section (14) is above a threshold.
